# EUROPÄISCHE PATENTSCHRIFT

(11) **EP 0 321 865 B1**
(45) Veröffentlichungstag und Bekanntmachung des Hinweises auf die Patenterteilung: **24.03.1993**
(21) Anmeldenummer: 88121014.0
(22) Anmeldetag: 15.12.1988
(51) Int. Cl.: H02M 7/515

(54) **Schaltentlasteter, verlustarmer Dreipunktwechselrichter**
Commutation-discharging, low power loss three-level inverter
Onduleur troix niveaux à déchargement de commutation et à perte réduite

(30) Priorität: 21.12.1987 DE 3743437; 21.12.1987 DE 3743436
(43) Veröffentlichungstag der Anmeldung: 28.06.1989
(73) Patentinhaber: SIEMENS AKTIENGESELLSCHAFT, 80333 München (DE)
(72) Erfinder: Holtz, Joachim, Prof. Dr., D-5600 Wuppertal 1 (DE); Salama, Samir, Dr., D-5600 Wuppertal 1 (DE); Salzmann, Theodor, D-8520 Erlangen (DE)

(56) Entgegenhaltungen:
- DE-A- 3 244 623
- 19th Annual IEEE Power Electronics Specialists Conference Doshisha University Kyoto, Japan,April 11-14, 1988 Joachim HOLTZ und Samir F. SALAMA : " Megawatt GTO-Inverter with Three-Level PWM Control and Regenarative Snubber Circuits", Seiten 1263-1270
- IEEE Tansactions on Industry Applications, Band 1A-17 Nr. 5, Sept/ Okt. 1981, S. 518-521

## Beschreibung

Die Erfindung betrifft einen Dreipunktwechselrichter gemäß den Merkmalen des Anspruches 1.

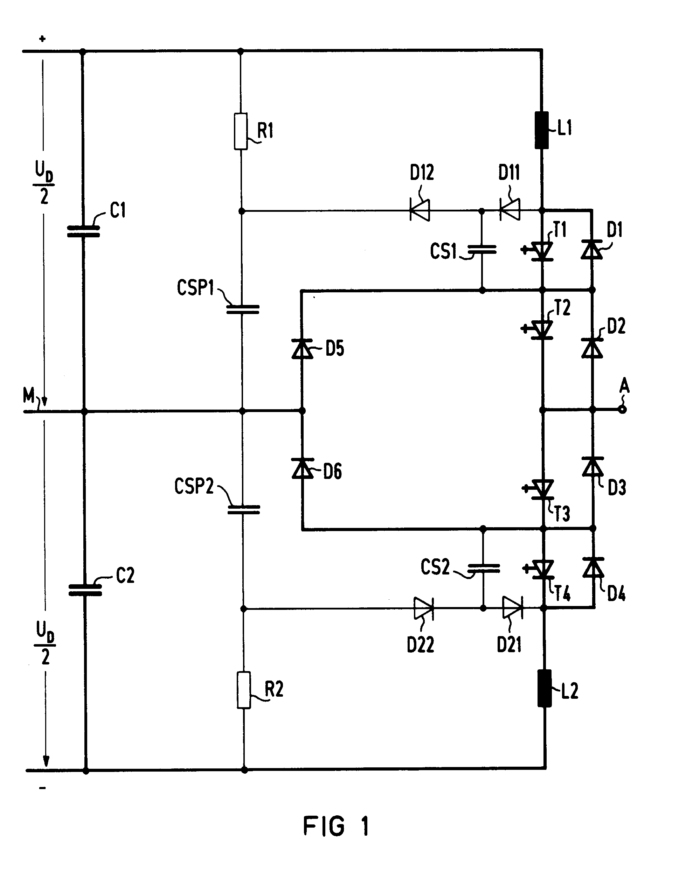

Der Leistungsteil eines "Dreipunktwechselrichters" ist z.B. aus der Veröffentlichung "A new neutral-point-clamped PWM inverter", in "IEEE Transactions On Industry Applications", VoI.IA-17, No.5, September/October 1981, S.518-521, insbesondere gemäß der in der dortigen FIG 1 dargestellten Schaltung bekannt.

Aus der DE-OS 32 44 623 sind desweiteren insbesondere gemäß den dortigen Figuren 5 bzw.6 Beschaltungen bekannt für die den Leistungsteil in einer Phase eines Brückenwechselrichters bildenden beiden Antiparallelschaltungen aus je einem Halbleiterschaltelement und der dazugehörigen Freilaufdiode. Diese dienen bevorzugt zur Ausschaltentlastung der Halbleiterschaltelemente, indem während des Abschaltvorganges die Anstiegsgeschwindigkeit der wiederkehrenden positiven Vorwärtsspannung begrenzt und somit das Auftreten unzulässig hoher Verlustenergien im jeweiligen Halbleiterschaltelement vermieden wird. In einer Ausführungsform dieser bekannten Beschaltung wird einer der beiden Antiparallelschaltungen in einer Phase des Brückenwechselrichters eine Reihenschaltung aus einer ersten Abschaltentlastungsdiode und einem Abschaltentlastungskondensator parallel geschaltet. Der Verbindungspunkt dieser beiden Beschaltungselemente steht über eine zweite Abschaltentlastungsdiode mit dem Verbindungspunkt zwischen den Elementen einer zweiten Reihenschaltung in elektrischem Kontakt. Diese besteht aus einem Gleichstromverbraucher und einem Speicherkondensator, und ist der speisenden Gleichspannungsquelle parallel geschaltet.

Zur Begrenzung der Anstiegsgeschwindigkeit des Laststromes beim Einschalten eines der Halbleiterschaltelemente dient bevorzugt eine zusätzliche Einschaltentlastungsdrossel. Diese ist dem zur Verbindung mit dem jeweiligen Potential der Gleichspannungsquelle vorgesehenen Anschlußpunkt derjenigen Antiparallelschaltung vorgeschaltet, welche mit der oben beschriebenen Beschaltung versehen ist. Abhängig vom konkreten Schaltungsaufbau kann diese Einschaltentlastungsdrossel auch durch die unvermeidlichen, parasitären Streuinduktivitäten der Zuleitungen gebildet werden. Diese Einschaltentlastungsdrossel dient gleichzeitig als sogenannte "Umschwingdrossel", um bei Einschaltung eines der Halbleiterschaltelemente des Wechselrichters insbesondere den Abschaltentlastungskondensator in einen solchen Ladezustand zu bringen, daß dieser bei einer anschließenden Abschaltung eines der Halbleiterschaltelemente entlastend wirken kann.

Bei einem solchen Abschaltvorgang wird der von der Einschaltentlastungsdrossel getriebene Laststrom über die erste Abschaltentlastungsdiode zunächst auf den Abschaltentlastungskondensator umgelenkt. Auf diese Weise wird zum einen der Strom durch das abzuschaltende Halbleiterschaltelement nahezu schlagartig unterbrochen und zum anderen die Anstiegsgeschwindigkeit der wiederkehrenden positiven Sperrspannungen in Vorwärtsrichtung aufgrund der endlichen Umladegeschwindigkeit des Abschaltentlastungskondensators begrenzt. Nachdem sich der Abschaltentlastungskondensator auf den Wert der speisenden Gleichspannung aufgeladen hat führt der Strom der Einschaltentlastungsdrossel bis zum vollständigen Abklingen desselben zu einer weiteren Aufladung der nun wirksamen Parallelschaltung aus dem Abschaltentlastungskondensator und dem Speicherkondensator. Hierdurch werden die beiden Kondensatoren allerdings nur geringfügig überladen, so daß die Überspannungsbeanspruchung des abzuschaltenden Halbleiterschaltelementes gering bleibt. Diese Eigenschaft der Beschaltung kann weiter dadurch begünstigt werden, daß der Speicherkondensator im Vergleich zum Abschaltentlastungskondensator eine erheblich größere Kapazität aufweist. Der Speicherkondensator hat somit die Aufgabe, die Energie der zur Einschaltentlastung dienenden Einschaltentlastungsdrossel und des zur Abschaltentlastung dienenden Abschaltentlastungskondensators zeitweise zwischenzuspeichern. Damit der Speicherkondensator dies für jeden Schaltzyklus in der gleichen Weise ausführen kann, wird er über den in Reihe geschalteten Gleichstromverbraucher periodisch entladen. Als Gleichstromverbraucher kann ein ohmscher Widerstand verwendet werden. In einer anderen Ausführungsform ist es jedoch vorteilhaft, die bei der Schaltentlastung der Halbleiterschaltelemente der jeweiligen Wechselrichterphase anfallende Verlustenergie nicht zu vernichten, sondern mittels einer Rückspeiseschaltung in die speisende Gleichspannungsquelle rückzuführen.

Da bei der Abschaltung des einen Halbleiterschaltelements einer Phase die Reihenschaltung aus der ersten Abschaltentlastungsdiode und dem Abschaltentlastungskondensator, bei der Abschaltung des anderen Halbleiterschaltelementes der Phase aber die Reihenschaltung aus dem Abschaltentlastungskondensator, der zweiten Abschaltentlastungsdiode und dem Speicherkondensator den "Entlastungsweg" für den abzukommutierenden Laststrom bildet, hat diese Schaltung eine leichte "Unsymmetrie". Diese äußert sich in einer geringfügig größeren parasitären Streuinduktivität bei dem Entlastungsweg für das andere Halbleiterschaltelement, und damit in einer geringfügig größeren Spannungsbeanspruchung während der Abschaltung dieses Halbleiterschaltelementes.

Anhand der nachfolgend kurz angeführten Figuren werden ein bekannter Stand der Technik und die Erfindung des weiteren näher erläutert. Dabei zeigt:
FIG 1 eine Phase eines Dreipunktwechselrichters mit einer Beschaltung gemäß der vorliegenden Erfindung,
FIG 2 die Schaltung gemäß der FIG 1 mit zusätzlichen Beschaltungen für die "inneren" Halbleiterschaltelemente der Dreipunktwechselrichterphase,
FIG 3 die Schaltung gemäß der FIG 2 mit zusätzlichen Energierückspeisevorrichtungen für die erfindungsgemäße Beschaltung und mit einer modifizierten Zusatzbeschaltung für die "inneren" Halbleiterschaltelement,
FIG 4 die Schaltung gemäß der FIG 3 mit einer weiteren Energierückspeisevorrichtung für die Zusatzbeschaltung der "inneren" Halbleiterschaltelement,
FIG 5 einen dreiphasigen Dreipunktwechselrichter mit der erfindungsgemäßen Beschaltung gemäß FIG 1,
FIG 6 eine Phase eines Dreipunktwechselrichters mit einer weiteren Ausführungsform der erfindungsgemäßen Beschaltung von FIG 1,
FIG 7 die Schaltung gemäß der FIG 6 mit zusätzlichen Energierückspeisevorrichtungen für die erfindungsgemäße Beschaltung, und
FIG 8 einen dreiphasigen Dreipunktwechselrichter mit der Ausführungsform der erfindungsgemäßen Beschaltung gemäß der FIG 6.

Anhand der in der FIG 1 dargestellten Schaltung wird desweiteren der bekannte Leistungsteil eines Dreipunktwechselrichters am Beispiel einer Phase näher erläutert. Diese enthält eine Reihenanordnung von vier Antiparallelschaltungen aus je einem Halbleiterschaltelement und einer Freilaufdiode. Als Halbleiterschaltelemente können bevorzugt Leistungs-MOS-Feldeffekt-Transistoren, bipolare Leistungstransistoren oder abschaltbare Thyristoren ("GTO-Thyristoren") eingesetzt werden. Bei der Verwendung von Leistungs-Feldeffekt-Transistoren kann die jeweilige antiparallele Freilaufdiode aufgrund der häufig bereits bauelementeintern vorhandenen "Inversdiode" entfallen. In der in der FIG 1 dargestellten Phase sind beispielhaft den vier GTO-Thyristoren T1,T2, T3,T4 jeweils die Freilaufdioden D1,D2,D3,D4 antiparallel geschaltet. Die hieraus gebildete erste bzw. dritte Antiparallelschaltung aus T1,D1 bzw. T3,D3, und die zweite bzw. vierte Antiparallelschaltung aus T2,D2 bzw. T4,D4 stellen dabei je einen Teil der dargestellten Wechselrichterphase dar. Diese Reihenanordnung aus den vier Antiparallelschaltung wird über vier Anschlußpunkte von einer Gleichspannungsquelle Uα gespeist. Zum einen sind die Enden der Reihenanordnung über je eine Einschaltentlastungsdrossel L1 bzw. L2 an dem positiven bzw. negativen Potential der Gleichspannungsquelle angeschlossen. Die beiden anderen Anschlußpunkte entsprechen den Verbindungspunkten der ersten mit der zweiten bzw. der dritten mit der vierten Antiparallelschaltung. Diese sind über je eine erste bzw. zweite Entkoppeldiode D5 bzw. D6 an den Verbindungspunkt M ("virtueller Mittelpunkt") von zwei Spannungsteilerkondensatoren C1 und C2 angeschlossen, welche wiederum von der Gleichspannungsquelle U_{D} gespeist werden. Der Verbindungspunkt zwischen der zweiten und der dritten Antiparallelschaltung dient schließlich als Ausgang A der Wechselrichterphase. Es ist nicht in jedem Fall notwendig, die Einschaltentlastungsdrosseln L1 und L2 als konkrete Bauelemente vorzusehen. Abhängig vom konkreten Schaltungsaufbau können vielmehr auch die häufig vorhandenen parasitären Leitungsinduktivitäten zur Stromanstiegsbegrenzung in den Zuführungen der Wechselrichterphase ausreichend sein.

Bei einer derartigen Schaltung ist es notwendig, Schaltentlastungen für die Leistungshalbleiter vorzusehen. Hierzu können die GTO-Thyristoren T1,T2,T3,T4 und die Entkoppeldioden D5,D6 jeweils beispielsweise mit einem RCD-Entlastungsnetzwerk versehen werden. Eine derartige Beschaltung hat aber den Nachteil, daß zur Erzielung der notwendigen Schaltentlastung eine Vielzahl von Bauelementen notwendig ist.

In der europäischen Patentanmeldung mit Anmeldenummer 88110741.1 ist desweiteren eine "Vorrichtung zur verlustarmen Beschaltung der Halbleiterschaltelemente eines Dreipunktwechselrichters" angegeben. Die dortige Beschaltung hat allerdings den Nachteil, daß zur Erzielung des gewünschten Schaltentlastungseffektes eine Vielzahl von Bauelementen notwendig ist. Desweiteren ist es für die Funktionsfähigkeit der Beschaltung vorteilhaft, insbesondere durch Verwendung zusätzlicher Einschaltentlastungsdrossel im eigentlichen Leistungsteil Veränderungen in der "Grundschaltung" des Dreipunktwechselrichters vorzunehmen. Hierdurch wird der Schaltungsaufwand weiter erhöht.

Der Erfindung liegt somit die Aufgabe zugrunde, eine Beschaltung zur möglichst gleichmäßigen Ein- und Ausschaltentlastung der Halbleiterschaltelemente in den Phasen eines Dreipunktwechselrichters anzugeben, bei der eine möglichst geringe Anzahl von Bauelementen benötigt wird.

Die Aufgabe wird gelöst durch die Merkmale des Anspruches 1 und des nebengeordneten Anspruches 11. Vorteilhafte Ausgestaltungen der Erfindung sind in den Unteransprüchen angegeben.

Es ist ein besonderer Vorteil der Erfindung, daß die aus der DE-OS 32 44 623 für die Halbleiterschaltelemente in den Phasen eines Wechselrichters in Brückenschaltung bekannte Beschaltung prinzipiell auch für die Halbleiterschaltelement in den Phasen eines sogenannten "Dreipunktwechselrichters" verwendet werden kann. Zur Applikation dieser bekannten Beschaltung auf einen Dreipunktwechselrichter sind keinerlei Anpassungen im Leistungsteil desselben notwendig. Desweiteren hat es sich als besonders vorteilhaft herausgestellt, daß die bekannte Beschaltung in einer ersten Ausführungsform der Erfindung schaltungstechnisch intern vollkommen unverändert verwendet werden kann. Es ist ein weiterer Vorteil der Erfindung, daß bei Bedarf zusätzlich andere, ebenfalls schaltentlastend wirkende Beschaltungen, insbesondere "RCD"-Beschaltungen, hinzugeschaltet werden können, ohne daß die erfindungsgemäße Beschaltung in der Funktionsfähigkeit beeinträchtigt wird.

Anhand der bereits kurz angeführten Figuren 1 bis 8 wird die Erfindung desweiteren näher erläutert.

Gemäß der vorliegenden Erfindung ist der eine bzw. andere Teil des in der FIG 1 dargestellten und aus den Elementen T1, D1, T3, D3 bzw. T2, D2, T4, D4 bestehenden Leistungsteils einer Phase eines Dreipunktwechselrichters mit je einer Beschaltung versehen, welche aus den Elementen D11, CS1, D12, CSP1, R1 bzw. D21, CS2, D22, CSP2, R2 besteht. Dabei ist der ersten Antiparallelschaltung aus dem Halbleiterschaltelement T1 und der Freilaufdiode D1 eine Reihenschaltung aus einer ersten Beschaltungsdiode D11 und einem ersten Ausschaltentlastungskondensator CS1 parallel geschaltet. Der Verbindungspunkt dieser beiden Elemente steht über eine dritte Beschaltungsdiode D12 mit dem Verbindungspunkt einer weiteren Reihenschaltung zweier Elemente in elektrischem Kontakt.

Diese Reihenschaltung besteht aus einem ersten Speicherkondensator CSP1 und bevorzugt einem ersten Entladewiderstand R1 als Gleichstromverbraucher, und ist dem ersten Spannungsteilerkondensator C1 für die Eingangsgleichspannung Uα parallel geschaltet. In der gleichen Weise ist der vierten Antiparallelschaltung aus dem Halbleiterschaltelement T4 und der Freilaufdiode D4 eine Reihenschaltung aus einer zweiten Beschaltungsdiode D21 und einem zweiten Ausschaltentlastungskondensator CS2 parallel geschaltet. Auch der Verbindungspunkt dieser beiden Elemente steht über eine vierte Beschaltungsdiode D22 in elektrischem Kontakt mit dem Verbindungspunkt der beiden Elemente einer weiteren Reihenschaltung. Diese besteht aus einem zweiten Speicherkondensator CSP2 und bevorzugt einen zweiten Entladewiderstand R2 als Gleichstromverbraucher, und ist dem zweiten Spannungsteilerkondesator C2 für die Eingangsgleichspannung Uα parallel geschaltet.

Zur Erzeugung einer positiven Spannung am Ausgang A der in der FIG 1 dargestellten Phase des Dreipunktwechselrichters werden bei leitendem Halbleiterschaltelement T2 und gesperrtem Halbleiterschaltelement T4 bevorzugt die Halbleiterschaltelement T1 und T3 abwechselnd hintereinander ein- und ausgeschaltet. Wird in einem solchen Fall beispielsweise das stromführende Halbleiterschaltelement T1 abgeschaltet, so dient zu dessen Ausschaltentlastung die Reihenschaltung aus der ersten Beschaltungsdiode D11 und dem ersten Ausschaltentlastungskondensator CS1 als "Entlastungsweg". Für den nach Aufladung des Kondensators CS1 auf den Wert der halben Eingangsgleichspannung U_{D} über die Einschaltentlastungsdrossel L1 noch fließenden Strom ist bis zum vollständigen Abklingen desselben die Parallelschaltung aus dem ersten Ausschaltentlastungskondensator CS1 und der Reihenschaltung aus der dritten Beschaltungsdiode D12 und dem ersten Speicherkondensator CSP1 wirksam. Ein bevorzugt als ein erster Entladewiderstand R1 ausgeführter Gleichstromverbraucher dient zur Rückführung der nur geringfügig über den Wert von U_{D} aufgeladenen Kondensatoren CS1 und CSP1 auf den Wert der Eingangsgleichspannung U_{D}.

Bei einer Einschaltung von T1 wird nach Übergang des Laststromes von der Entkoppeldiode D5 auf das Halbleiterschaltelement T1 der Ausschaltentlastungskondensator CS1 über die Elemente D12, CSP1, C1, L1 und T1 entladen. Nach Entladung von CS1 klingt der in der Einschaltentlastungsdrossel L1 über den Wert des Laststromes hinaus gespeicherte Strom über die Elemente D11, D12, CSP1, C1 ab und führt zu einer Aufladung des Speicherkondensators CSP1. Der hierdurch wiederum geringfügig über den Wert der Eingangsspannung Uα aufgeladene Speicherkondensator CSP1 entlädt sich schließlich über den ersten Entladewiderstand R1 bis auf den Wert von Up. Nun hat die Beschaltung ihren "Ausgangszustand wieder erreicht und kann erneut ausschaltentlastend wirken.

Dieser "obere" Beschaltungsteil aus den Elementen D11, CS1, D12, CSP1, R1 wirkt ebenfalls entlastend bei Ausschaltung des stromführenden Halbleiterschaltelementes T3. In diesem Fall dient besonders vorteilhaft zur Schaltentlastung der Reihenschaltung aus dem Halbleiterschaltelement T3 und der zweiten Entkoppeldiode D6 die parallel geschaltete Reihenschaltung aus der Freilaufdiode D2, dem ersten Ausschaltentlastungskondensator CS1, der dritten Beschaltungsdiode D12 und dem ersten Speicherkondensator CSP1. Man erkennt, daß der bei Abschaltung des Halbleiterschaltelementes T3 wirksame "Entlastungsweg" durch die Schaltung "länger" ist als bei einer Abschaltung des Halbleiterschaltelementes T1, bei dem die unmittelbar parallel geschaltete Reihenanordnung aus der ersten Beschaltungsdiode D11 und dem ersten Speicherkondensator CS1 die Entlastung bewirkt. So hat der bei der Ausschaltung von T3 wirksame Entlastungsweg eine geringfügig größere parasitäre Streuinduktivität, und es ist aus diesem Grund mit einer geringfügig größeren Spannungsbeanspruchung des abzuschaltenden Halbleiterschaltelementes T3 zu rechnen. Desweiteren wird die Streuung dieses "längeren" Entlastungsweges geringfügig weiter dadurch erhöht, daß nun die vier Bauelemente D2, CS1, D12 und CSP1 an der Entlastung von T3 beteiligt sind, während dies bei der Entlastung von T1 lediglich die Bauelemente D11 und CS1 sind. Insbesondere durch die bei Dioden zu Beginn der Stromführung auftretende "Einschaltüberspannung" ("Spike"-Spannung) kann in diesem Fall die "Qualität" der Entlastung von T3 beeinträchtigt werden. Diese schaltungsbedingte "Unsymmetrie" in der zu erreichenden Entlastungswirkung für die beiden zur Erzeugung einer positiven Ausgangsspannung benötigten Halbleiterschaltelemente T1 und T3 kann in der Praxis insbesondere durch einen besonders sorgfältigen schaltungstechnischen Aufbau und durch die Verwendung eines Speicherkondensators mit einer im Vergleich zum Ausschaltentlastungskondensator wesentlich größerem Kapazität ausreichend "harmonisiert" werden.

Zur Erzeugung einer negativen Spannung am Ausgang A der in der FIG 1 dargestellten Phase werden bei leitendem Halbleiterschaltelement T3 und gesperrtem Halbleiterschaltelement T1 die beiden Halbleiterschaltelemente T2 und T4 abwechselnd pulsartig ein-und ausgeschaltet. In diesem Fall wirkt der aus den Elementen D21, CS2, D22, CSP2 und R2 bestehende untere Teil der Beschaltung vergleichbar mit den eben beschriebenen Vorgängen im oberen Teil der Beschaltung schaltentlastend für das Halbleiterschaltelement T4 und die Reihenschaltung aus dem Halbleiterschaltelement T2 und der Entkoppeldiode D5.

Es ist ein besonderer Vorteil dieser erfindungsgemäßen Beschaltung, daß die zeitweise vom vollen Laststrom durchflossenen Entkoppeldioden D5,D6 des Leistungsteils des Dreipunktwechselrichters von der erfindungsgemäßen Schaltentlastung mit erfaßt werden. Es sind somit keine separaten Schaltentlastungen für die Entkoppeldioden D5,D6 notwendig.

Es ist ein besonderer Vorteil der erfindungsgemäßen Beschaltung, daß sich keiner der zur Entlastung einer der Halbleiterschaltelemente T1 bis T4 notwendigen "Entlastungswege" über einen der Spannungsteilerkondensatoren C1 bzw. C2 schließt. Die zu erwartenden parasitären Streuungen der einzelnen Entlastungswege sind somit relativ gering, so daß in der Regel nicht mit einer unzulässig hohen Spannungsbeanspruchung beim Ausschaltvorgang eines der Halbleiterschaltelemente zu rechnen ist. Aus diesem Grund ist es mit der erfindungsgemäßen Beschaltung gemäß der FIG 1 auch möglich, in der Betriebsart "Impulslöschung" zur Stillsetzung des Dreipunktwechselrichters z.B. im Fall eines lastseitigen Fehlers die jeweils gezündeten Halbleiterschaltelemente ohne Rücksicht auf den aktuellen Wert des Laststromes abzuschalten. Würde sich dagegen einer der Entlastungswege über den Zwischenkreis schließen, so ist unter Umständen ein laststromunabhängiges Abschalten des betreffenden Halbleiterschaltelementes nicht möglich. Vielmehr muß in diesem Fall unter Umständen erst das natürliche Abklingen des Laststromes abgewartet werden, bis ein zerstörungsfreies Abschalten der jeweiligen Halbleiterschaltelemente möglich ist.

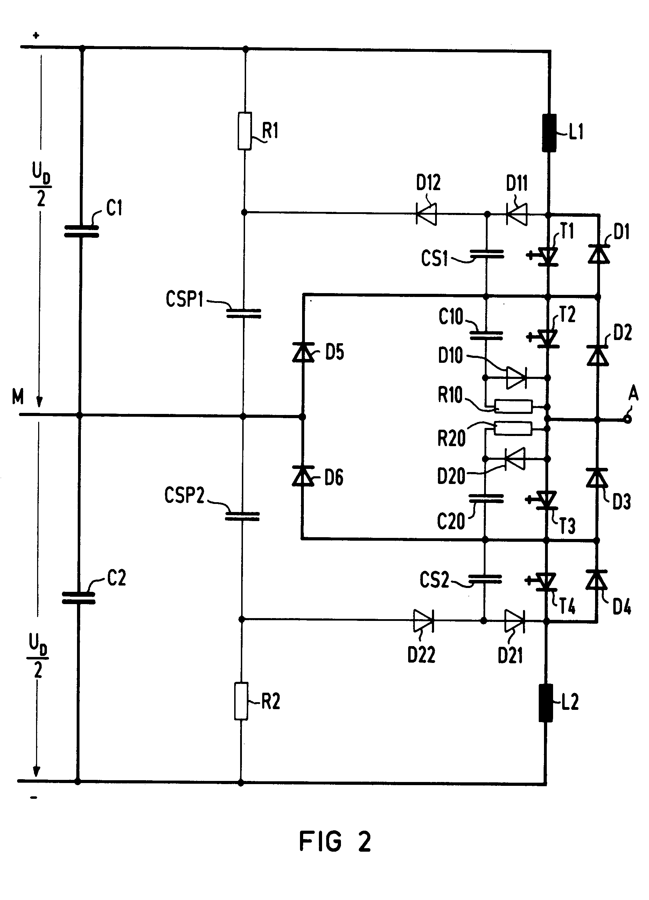

In der FIG 2 ist eine weitere vorteilhafte Ausführungsform einer Phase des erfindungsgemäß beschalteten Dreipunktwechselrichters dargestellt. Jede der beiden "inneren" Antiparallelschaltungen aus den Halbleiterschaltelement T2 und der Freilaufdiode D2 bzw. dem Halbleiterschaltelement T3 und der Freilaufdiode D3 ist in diesem Fall mit einem zusätzlichen, bekannten "RCD"-Beschal- tungsnetzwerk versehen. Dabei ist der erste Zusatzbeschaltungskondensator C10, die erste Zusatzbeschaltungsdiode D10 und der erste Zusatzbeschaltungswiderstand R10 der zweiten Antiparallelschaltung, bzw. der zweite Zusatzbeschaltungskondensator C20, die zweite Zusatzbeschaltungsdiode D20 und der zweite Zusatzbeschaltungswiderstand R20 der dritten Antiparallelschaltung zugeordnet. Die Kapazitäten der Zusatzbeschaltungskondensatoren C10 und C20 werden im Vergleich zu den Elementen CS1, CS2, CSP1 bzw. CSP2 bevorzugt erheblich kleiner gewählt, da diese insbesondere nur die "Spike"-Spannungen der Freilaufdioden D2 bzw. D3 zu bedämpfen haben. Diese Ausführungsform der Erfindung ist besonders dann von Vorteil, wenn aus Gründen des praktischen Schaltungsaufbaues bzw. aufgrund der spezifischen Kenndaten der verwendeten Halbleiterschaltelemente T1 bis T4 der "Entlastungsweg" für die "inneren" Halbleiterschaltelemente T2 und T4 eine unzulässig hohe parasitäre Streuinduktivität aufweisen sollte. Es ist ein besonderer Vorteil der Erfindung, daß die erfindungsgemäße Beschaltung gemäß der FIG 1 ohne Beeinträchtigung der Funktionsweise mit anderen bekannten Beschaltungen, z.B. "RCD"-Ausschaltentlastungen gemäß dem Ausführungsbeispiel der FIG 2, kombinierbar ist.

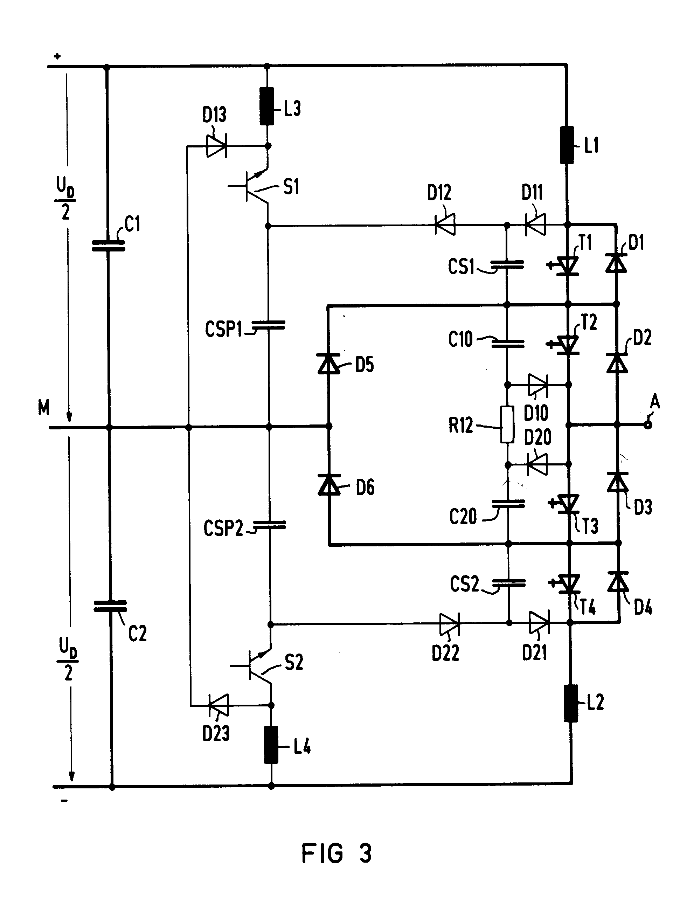

In der FIG 3 ist eine weitere vorteilhafte Ausführungsform der Erfindung dargestellt. Dabei ist zum einen anstelle der beiden separaten, den Zusatzbeschaltungen für die zweite bzw. dritte Antiparallelschaltung zugeordneten Ersatzwiderstände R10 und R20 ein gemeinsamer Ersatzwiderstand R12 verwendet, und an den Verbindungspunkten zwischen den Elementen C10 und D10 bzw. C20 und D20 angeschlossen. Zum anderen sind anstelle der in den Ausführungsbeispielen der FIG 1 bzw. FIG 2 bevorzugt als Gleichstromverbraucher verwendeten Entladewiderstände R1 bzw. R2 Energierückspeiseschaltungen vorgesehen. Diese ermöglichen eine Rückspeisung der bei der Abschaltung der einzelnen Halbleiterschaltelemente anfallenden und in den Speicherkondensatoren CSP1 bzw. CSP2 zwischengespeicherten Abschaltverlustenergien. Jede dieser Energierückspeiseschaltungen besteht aus je einem Schaltelement S1 bzw. S2, einer Speicherinduktivität L3 bzw. L4 und einer Ankoppeldiode D13 bzw. D23. Dabei ist in der Beschaltung anstelle des jeweiligen Entladewiderstandes die Reihenschaltung aus einem der Schaltelemente und der dazugehörigen Speicherinduktivität eingesetzt. Der Verbindungspunkt zwischen den Elementen S1 und L3 bzw. S2 und L4 ist jeweils über eine der beiden Ankoppeldioden D13 bzw. D23 mit dem Verbindungspunkt M der beiden Spannungsteilerkondensatoren C1 und C2 verbunden.

Zur Rückspeisung z.B. der im Speicherkondensator CSP1 enthaltenen Überladeenergie wird der erste Schalter S1 mit einer hohen Frequenz getaktet. Dabei wird im geschlossenen Zustand des Schalters S1 ein Teil der Kondensatorenergie in die Speicherinduktivität L3 übertragen. Da beim darauffolgenden Öffnen des Schalters S1 der Stromfluß durch die Induktivität L3 nicht schlagartig unterbrochen werden kann, wird auf diese Weise Energie über L3 in die Gleichspannungsquelle Uα rückgespeist. Die Ankoppeldiode D13 verhindert dabei ein erneutes "Rückschwingen" der Energie aus der Gleichspannungsquelle, was bei der einem Schwingkreis sehr ähnlichen und aus den Elementen L3, C1, D13 gebildeten Masche bei Nichtvorhandensein der Ankoppeldiode D13 der Fall wäre. Eine solche Energierückspeiseschaltung wird auch als "Chopper-Schaltung" bezeichnet.

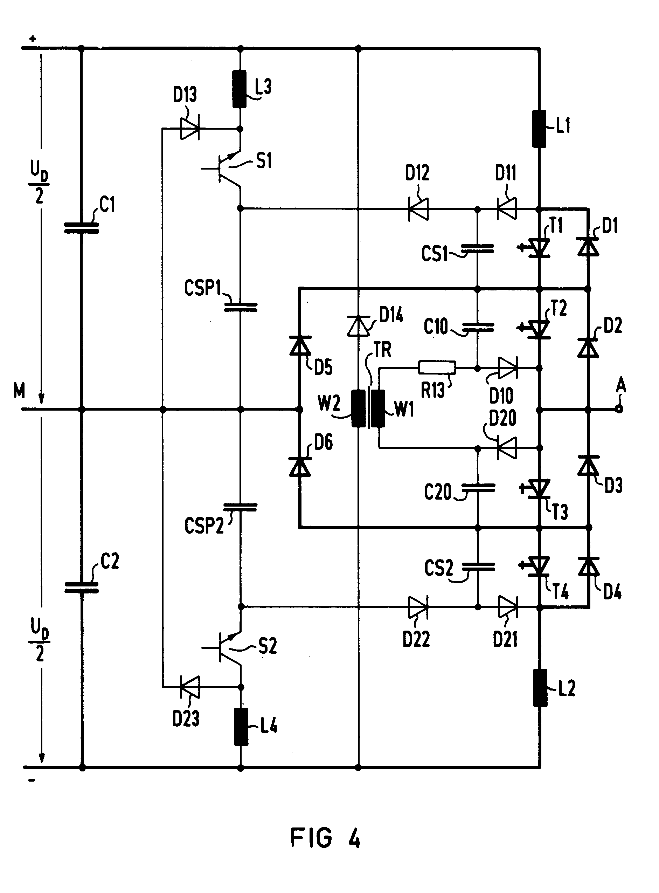

Die FIG 4 zeigt eine weitere vorteilhafte Ausführungsform der erfindungsgemäßen Beschaltung. Dabei ist anstelle des gemeinsamen Zusatzbeschaltungswiderstandes R12 gemäß der Schaltung von FIG 3 eine weitere Energierückspeisevorrichtung für die Verlustenergien vorgesehen, welche in den den Antiparallelschaltungen T2, D2 bzw. T3, D3 zugeordneten Zusatzbeschaltungen aus den Elementen C10, D10 bzw. C20, D20 zwischengespeichert werden. Diese Rückspeisevorrichtung besteht insbesondere aus einem Trenntransformator TR, dessen Primärwicklung W1 über einen Dämpfungswiderstand R13 mit den Verbindungspunkten der Elemente C10, D10, bzw. C20, D20 in elektrischem Kontakt steht. Die Sekundärwicklung W2 des Trenntransformators ist über eine weitere Ankoppeldiode D14 mit dem positiven bzw. negativen Potential der Eingangsgleichspannung Uα verbunden. Es ist besonders vorteilhaft, wenn die Sekundärwicklung W2 eine größere Windungszahl als die Primärwicklung W1 hat. Das Windungszahlverhältnis W2 : W1 kann z.B. 4 : 1 betragen. Diese Ausführungsform stellt besonders vorteilhaft eine hochwirksame und gleichzeitig nahezu vollständig verlustfreie Schaltentlastung für einen Dreipunktwechselrichter dar.

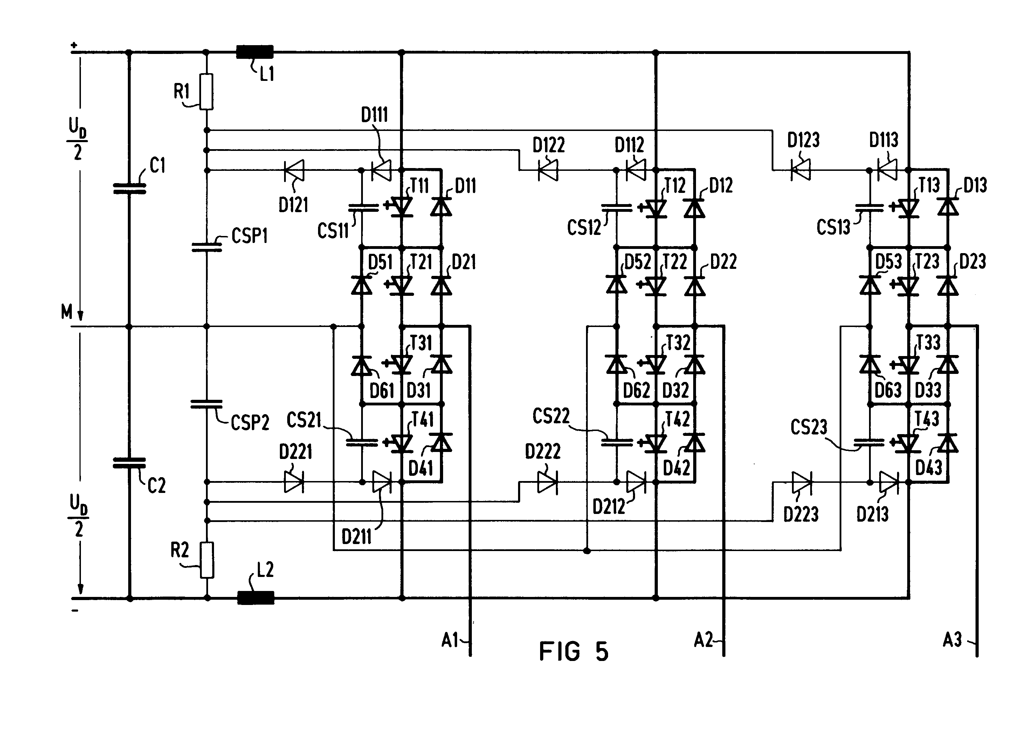

In der FIG 5 ist schließlich die Erfindung am Beispiel eines dreiphasigen Dreipunktwechselrichters mit den Ausgängen A1 bis A3 gezeigt. Wie darin bereits dargestellt, ist es ein weiterer Vorteil der Erfindung, daß die Reihenschaltung aus dem ersten Speicherkondensator CSP1 und dem ersten Entladewiderstand R1 bzw. die Reihenschaltung aus dem zweiten Speicherkondensator CSP2 und den zweiten Entladewiderstand R2 jeweils nur einmal benötigt wird. Die oberen bzw. unteren Hälften aller Wechselrichterphasen sind an den Verbindungspunkt dieser Elemente über die jeweiligen Beschaltungsdioden D121, D111; D122, D112 ... bzw. D221, D211; D222, D212 ... gemeinsam angeschlossen.

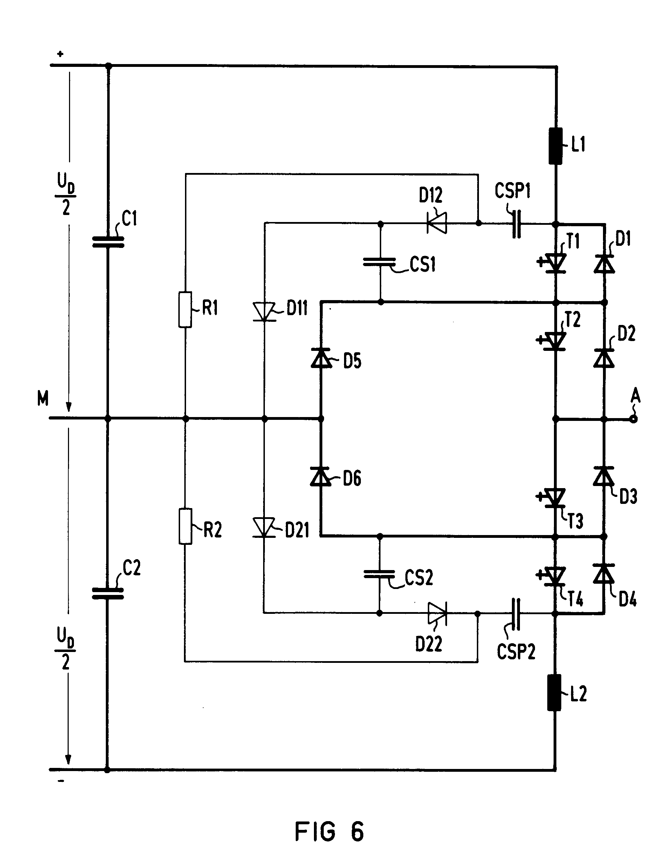

Eine weitere besonders vorteilhafte Ausführungsform der Erfindung ist in FIG 6 in Form einer sogenannten "invertierten" Anordnung der Schaltung von FIG 1 dargestellt. Jedes der Elemente der Beschaltung von FIG 1 ist somit auch in der Schaltung von FIG 6 vorhanden. So dient zur Schaltentlastung des ersten Halbleiterschaltelementes T1 und der Reihenschaltung aus dem Halbleiterschaltelement T3 und der Entkoppeldiode D6 ebenfalls eine Beschaltung mit einer ersten Beschaltungsdiode D11, einem ersten Ausschaltentlastungskondensator CS1, einer dritten Beschaltungsdiode D12, einem ersten Speicherkondensator CSP1 und bevorzugt einem ersten Entladewiderstand R1. Die Reihenschaltung aus der ersten Beschaltungsdiode D11 und dem ersten Ausschaltentlastungskondensator CS1 ist dabei der ersten Entkoppeldiode D5 parallel geschaltet. Desweiteren ist die Reihenschaltung aus dem ersten Speicherkondensator CSP1 und dem ersten Entladewiderstand R1 dabei der Reihenschaltung aus der ersten Einschaltentlastungsdrossel L1 und dem ersten Spannungsteilerkondensator C1 parallel geschaltet. Die Verbindungspunkte zwischen den Elementen D11, CS1 und CSP1, R1 stehen auch hier über die dritte Beschaltungsdiode D12 in elektrischem Kontakt. In der gleichen Weise ist dem Halbleiterschaltelement T4 bzw. der Reihenschaltung aus dem Halbleiterschaltelement T2 und der Entkoppeldiode D5 eine Beschaltung aus den bekannten Elementen D21, CS2, D22, CSP2 und R2 zugeordnet.

Aufgrund der im Vergleich zur Schaltung von FIG 1 "invertierten" Anordnung der bekannten Beschaltungselemente ergeben sich veränderte "Entlastungswege" bei der Ausschaltung der einzelnen Halbleiterschaltelemente. Dies sei am Beispiel der Halbleiterschaltelemente T1 und T3 für den oberen Teil der Beschaltung aus den Elementen CSP1, D12, CS1, D11 und R1 erläutert. So wirkt z.B. bei einer Abschaltung des Halbleiterschaltelementes T1 die parallel geschaltete Reihenanordnung aus dem ersten Speicherkondensator CSP1, der dritten Beschaltungsdiode D12 und dem ersten Abschaltentlastungskondensator CS1 entlastend. Desweiteren schließt sich für die Reihenanordnung aus dem Halbleiterschaltelement T3 mit der zweiten Entkoppeldiode D6 bei Abschaltung von T3 der "Entlastungsweg" über die Freilaufdiode D2, den ersten Abschaltentlastungskondensator CS1 und die erste Beschaltungsdiode D11. Auch in diesem Fall dient insbesondere ein erster Entladewiderstand R1 als Gleichstromverbraucher zur Rückführung des Ladezustandes insbesondere des Speicherkondensators CSP1 in einen Zustand, in dem dieser bei einer folgenden Abschaltung eines der Halbleiterschaltelemente die anfallende Verlustenergie erneut zwischenspeichern kann.

Die Funktionsweise der sogenannten "invertierten" Anordnung der bekannten Elemente gemäß der FIG 6 ist somit prinzipiell identisch der Schaltung von FIG 1. Die Ausführungsform gemäß der FIG 6 hat demgegenüber allerdings den erheblichen Vorteil, daß dabei die am Beispiel der FIG 1 bereits erläuterte schaltungsbedingte Unsymmetrie in den zu erwartenden Entlastungswirkungen für die Halbleiterschaltelemente T1 und T3 bzw. T4 und T2 bereits schaltungstechnisch weitgehend ausgeglichen ist. So schließt sich bei der Ausführungsform der FIG 6 z.B. der Entlastungsweg für T1 zwar über die Elemente CSP1, D12 und CS1, und ist somit "länger" als im Beispiel der FIG 1. Dafür schließt sich aber der Entlastungsweg für T3 über die Elemente D2, CS1 und D11, und ist somit "kürzer" als bei der Schaltung von FIG 1. Aus diesem Grund sind die zu erwartenden parasitären Streuinduktivitäten der beiden Entlastungswege annähernd gleich groß und unabhängiger von einem konkreten Schaltungsaufbau. So kann bei der Ausführungsform der Erfindung gemäß der FIG 6 auf eine mögliche Zusatzbeschaltung der "inneren" Halbleiterschaltelemente T2 und T3 insbesondere entsprechend den in den Figuren 2 bis 4 dargestellten Ausführungsformen verzichtet werden.

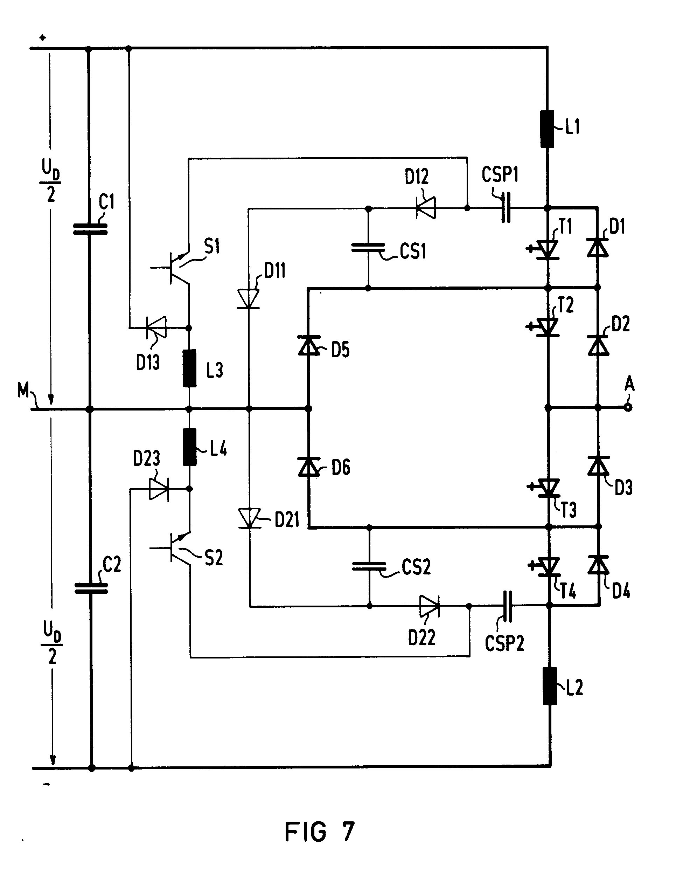

In der gleichen Weise wie bei den in den Figuren 3 und 4 dargestellten Ausführungsbeispielen können auch bei der Ausführungsform der Erfindung gemäß der FIG 6 die Entladewiderstände R1 und R2 vorteilhaft durch Energierückspeiseschaltungen ersetzt werden. Die bereits beschriebenen und aus den Elementen S1, L3, D13 und S2, L4, D23 bestehenden "Chopper-Schaltungen" sind in der FIG 7 dargestellt.

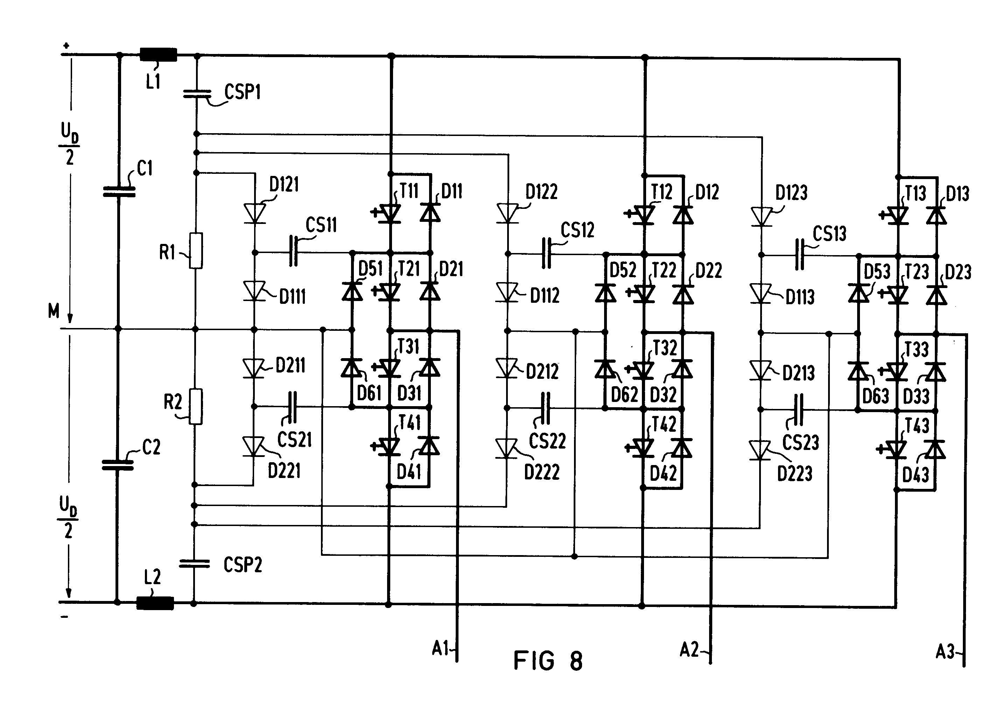

In der FIG 8 ist schließlich eine der Darstellung von FIG 5 vergleichbare dreiphasige Anordnung der Ausführungsform der Erfindung gemäß der FIG 6 dargestellt. Auch in diesem Fall werden die Reihenschaltungen aus den Elementen R1, CSP1 und R2, CSP2 für alle Phasen des Dreipunktwechselrichters nur einmal benötigt.

## Patentansprüche

1. Dreipunktwechselrichter, wobei eine Wechselrichterphase eine Reihenanordnung von vier Antiparallelschaltungen aus je einem Halbleiterschaltelement (T1,T2,T3,T4) und einer Freilaufdiode (D1,D2,D3,D4) enthält, der Verbindungspunkt der zweiten mit der dritten Antiparallelschaltung als Phasenausgang (A) dient, die Phase von einer Gleichspannungsquelle (U_{D}) gespeist wird, die Enden der Reihenanordnung über eine erste bzw. zweite Einschaltentlastungsdrossel (L1,L2) mit dem positiven bzw. negativen Potential der Gleichspannungsquelle (U_{D}) verbunden sind, und die Verbindungspunkte zwischen der ersten und zweiten bzw. dritten und vierten Antiparallelschaltung über eine erste bzw.zweite Entkoppeldiode (D5,D6) an den Verbindungspunkt (M) zwischen einem ersten und zweiten Spannungsteilerkondensator (C1,C2) angeschlossen sind, welche von der Gleichspannungsquelle (U_{D}) gespeist werden, dadurch gekennzeichnet, daß zur Entlastung der Halbleiterschaltelemente, insbesondere während des Ausschaltvorganges, der ersten bzw. vierten Antiparallelschaltung (T1,D1 bzw. T4,D4) eine erste bzw. zweite Reihenschaltung aus einer ersten bzw. zweiten Beschaltungsdiode und einem ersten bzw. zweiten Ausschaltentlastungskondensator (D11, CS1 bzw. D21, CS2) parallelgeschaltet ist, wobei der Verbindungspunkt zwischen den Elementen der ersten bzw. zweiten Reihenschaltung über eine dritte bzw. vierte Beschaltungsdiode (D12 bzw. D22) mit dem Verbindungspunkt zwischen den Elementen einer dritten bzw. vierten Reihenschaltung in elektrischem Kontakt steht, welche aus einem ersten bzw. zweiten Speicherkondensator und einem ersten bzw. zweiten Gleichstromverbraucher (CSP1,R1 bzw. CSP2,R2) besteht und dem ersten bzw. zweiten Spannungsteilerkondensator (C1 ,C2) parallelgeschaltet ist.

2. Dreipunktwechselrichter mit mehreren Phasen nach Anspruch 1, dadurch gekennzeichnet, daß alle Phasen über die jeweilige dritte bzw. vierte Beschaltungsdiode (D121,D221 bzw. D122,D222 ...) gemeinsam die dem ersten bzw. zweiten Spannungsteilerkondensator (C1,C2) parallelgeschaltete dritte bzw. vierte Reihenschaltung (CSP1,R1 bzw. CSP2, R2) angeschlossen sind.

3. Dreipunktwechselrichter nach Anspruch 1 oder 2, gekennzeichnet, durch je einen ohmschen Widerstand (R1,R2) als ersten bzw. zweiten Gleichstromverbraucher (FIG 1, 5).

4. Dreipunktwechselrichter nach Anspruch 1 oder 2, dadurch gekennzeichnet, daß als erster bzw. zweiter Gleichstromverbraucher je eine Energierückspeisevorrichtung mit einem ersten bzw. zweiten Schaltelement, einer ersten bzw. zweiten Speicherinduktivität und einer ersten bzw. zweiten Ankoppeldiode vorgesehen ist (S1, L3,D13 bzw. S2,L4,D23), wobei das jeweilige Schaltelement und die dazugehörige Speicherinduktivität anstelle des ersten bzw. zweiten Gleichstromverbrauchers mit dem ersten bzw. zweiten Speicherkondensator in Reihe geschaltet sind (CSP1,S1,L3 bzw. CSP2,S2,L4) und die Verbindungspunkte zwischen dem jeweiligen Schaltelement und der dazugehörigen Speicherinduktivität (S1,L3 bzw. S2,L4) zusätzlich über die erste bzw. zweite Ankoppeldiode (D13 bzw. D23) mit dem Verbindungspunkt (M) der beiden Spannungsteilerkondensatoren verbunden sind (FIG 3).

5. Dreipunktwechselrichter nach einem der vorangegangenen Ansprüche, dadurch gekennzeichnet, daß zur Entlastung der Halbleiterschaltelemente insbesondere während des Ausschaltvorganges der zweiten bzw. dritten Antiparallelschaltung (T2,D2 bzw. T3,D3) eine fünfte bzw. sechste Reihenschaltung aus einem ersten bzw. zweiten Zusatzbeschaltungskondensator und einer ersten bzw. zweiten Zusatzbeschaltungsdiode parallelgeschaltet ist (C10,D10bzw.C20,D20), und Mittel zur Entladung der Zusatzbeschaltungskondensatoren vorgesehen sind.

6. Dreipunktwechselrichter nach Anspruch 5, dadurch gekennzeichnet, daß als Mittel zur Entladung der Zusatzbeschaltungskondensatoren je ein dritter bzw. vierter Gleichstromverbraucher vorgesehen ist, welcher jeweils zwischen dem Verbindungspunkt des ersten bzw. zweiten Zusatzbeschaltungskondensators mit der ersten bzw. zweiten Zusatzbeschaltungsdiode (C10,D10 bzw. C20,D20) und dem Ausgang (A) der Wechselrichterphase angeschlossen ist.

7. Dreipunktwechselrichter nach Anspruch 6, gekennzeichnet durch je einen ohmschen Widerstand (R10,R20) als dritten bzw. vierten Gleichstromverbraucher (FIG 2).

8. Dreipunktwechselrichter nach Anspruch 5, dadurch gekennzeichnet, daß als Mittel zur Entladung der Zusatzbeschaltungskondensatoren ein fünfter Gleichstromverbraucher vorgesehen ist, welcher zwischen dem Verbindungspunkt des ersten Zusatzbeschaltungskondensators mit der ersten Zusatzbeschaltungsdiode (C10,D10) und dem Verbindungspunkt des zweiten Zusatzbeschaltungskondensators mit der zweiten Zusatzbeschaltungsdiode (C20,D20) angeschlossen ist.

9. Dreipunktwechselrichter nach Anspruch 8, gekennzeichnet durch einen ohmschen Widerstand (R12) als fünften Gleichstromverbraucher (FIG 3).

10. Dreipunktwechselrichter nach Anspruch 8, dadurch gekennzeichnet, daß als fünfter Gleichstromverbraucher eine weitere Energierückspeisevorrichtung mit einem Trenntransformator (TR) vorgesehen ist, dessen Primärwicklung (W1) über einen Dämpfungswiderstand (R13) an dem Verbindungspunkt des ersten Zusatzbeschaltungskondensators mit der ersten Zusatzbeschaltungsdiode (C10,D10) und an den Verbindungspunkt des zweiten Zusatzbeschaltungskondensators mit der zweiten Zusatzbeschaltungsdiode (C20,D20) angeschlossen ist, und dessen Sekundärwicklung (W2) über eine dritte Ankoppeldiode (D14) mit dem positiven und negativen Potential der Gleichspannungsquelle (U_{D}) verbunden ist (FIG 4).

11. Dreipunktwechselrichter, wobei eine Wechselrichterphase eine Reihenanordnung von vier Antiparallelschaltungen aus je einem Halbleiterschaltelement (T1,T2,T3,T4) und einer Freilaufdiode (D1,D2,D3,D4) enthält, der Verbindungspunkt der zweiten mit der dritten Antiparallelschaltung als Phasenausgang (A) dient, die Phase von einer Gleichspannungsquelle (U_{D}) gespeist wird, die Enden der Reihenanordnung über eine erste bzw. zweite Einschaltentlastungsdrossel (L1,L2) mit dem positiven bzw. negativen Potential der Gleichspannungsquelle (U_{D}) verbunden sind, und die Verbindungspunkte zwischen der ersten und zweiten bzw. dritten und vierten Antiparallelschaltung über eine erste bzw. zweite Entkoppeldiode (D5,D6) an den Verbindungspunkt (M) zwischen einem ersten und zweiten Spannungsteilerkondensator (C1,C2) angeschlossen sind, welche von der Gleichspannungsquelle (U_{D}) gespeist werden, dadurch gekennzeichnet, daß zur Entlastung der Halbleiterschaltelemente, insbesondere während des Ausschaltvorganges, der ersten bzw. zweiten Entkoppeldiode (D5 bzw. D6) eine erste bzw. zweite Reihenschaltung aus einer ersten bzw. zweiten Beschaltungsdiode und einem ersten bzw. zweiten Ausschaltentlastungskondensator (D11,CS1 bzw. D21, CS2) parallelgeschaltet ist, wobei der Verbindungspunkt zwischen den Elementen der ersten bzw. zweiten Reihenschaltung über eine dritte bzw. vierte Beschaltungsdiode (D12 bzw. D22) mit dem Verbindungspunkt zwischen den Elementen einer dritten bzw. vierten Reihenschaltung in elektrischem Kontakt steht, welche aus einem ersten bzw. zweiten Speicherkondensator und einem ersten bzw. zweiten Gleichstromverbraucher (CSP1,R1 bzw. CSP2,R2) besteht und welche der Reihenschaltung aus der ersten bzw. zweiten Einschaltentlastungsdrossel dem ersten bzw. zweiten Spannungsteilerkondensator (L1 ,C1 bzw. L2,C2) parallelgeschaltet ist.

12. Dreipunktwechselrichter mit mehreren Phasen nach Anspruch 11, dadurch gekennzeichnet, daß alle Phasen über die jeweilige dritte bzw. vierte Beschaltungsdiode (D121,D221 bzw. D122,D222 ...) gemeinsam an die der Reihenschaltung aus der ersten bzw. zweiten Einschaltentlastungsdrossel mit dem ersten bzw. zweiten Spannungsteilerkondensator (L1, (C1 bzw. L2,C2) parallelgeschaltete dritte bzw. vierte Reihenschaltung (SP1,R1 bzw. CSP2, R2) angeschlossen sind.

13. Dreipunktwechselrichter nach Anspruch 11 oder 12, gekennzeichnet, durch je einen ohmschen Widerstand (R1,R2) als ersten bzw. zweiten Gleichstromverbraucher (FIG 6, FIG 8).

14. Dreipunktwechselrichter nach Anspruch 11 oder 12, dadurch gekennzeichnet, daß als erster bzw. zweiter Gleichstromverbraucher je eine Energierückspeisevorrichtung mit einem ersten bzw. zweiten Schaltelement, einer ersten bzw. zweiten Speicherinduktivität und einer ersten bzw. zweiten Ankoppeldiode vorgesehen ist (S1, L3,D13 bzw.S2,L4,D23), wobei das jeweilige Schaltelement und die dazugehörige Speicherinduktivität anstelle des ersten bzw. zweiten Gleichstromverbrauchers mit dem ersten bzw. zweiten Speicherkondensator in Reihe geschaltet sind (CSP1,S1,L3 bzw. CSP2,S2,L4) und die Verbindungspunkte zwischen dem jeweiligen Schaltelement und der dazugehörigen Speicherinduktivität (S1,L3 bzw. S2,L4) zusätzlich über die erste bzw. zweite Ankoppeldiode (D13 bzw. D23) mit dem positiven und negativen Potential der Gleichspannungsquelle (U_{D}) verbunden sind (FIG 7).

## Claims

1. Three-level inverter, in which an inverter phase contains a series arrangement of four antiparallel circuit arrangements each consisting of a semiconductor switching element (T1, T2, T3, T4) and a free-wheeling diode (D1, D2, D3, D4), the connecting point of the second antiparallel circuit arrangement with the third antiparallel circuit arrangement serves as a phase output (A), the phase is fed by a direct voltage source (U_{D}), the ends of the series arrangement are connected, by way of a first and second switching-on relief choke (L1, L2), to the positive and negative potential respectively of the direct voltage source (U_{D}), and the connecting points between the first and second and between the third and fourth antiparallel circuit arrangement are connected, by way of a first and second decoupling diode (D5, D6) respectively, to the connecting point (M) between a first and second voltage divider capacitor (C1, C2), which capacitors are fed by the direct voltage source (U_{D}), characterised in that for the purpose of relieving the semiconductor switching elements, in particular during the switching-off process, connected in parallel with the first and fourth antiparallel circuit arrangement (T1, D1 and T4, D4 respectively) there is a first and second series circuit arrangement consisting of a first and second connecting diode and a first and second switching-off relief capacitor (D11, CS1 and D21, CS2 respectively), the connecting point between the elements of the first and second series circuit arrangement being in electrical contact, by way of a third and fourth connecting diode (D12 and D22 respectively), with the connecting point between the elements of a third and fourth series circuit arrangement which consists of a first and second storage capacitor and a first and second direct current load (CSP1, R1 and CSP2, R2 respectively) and is connected in parallel with the first and second voltage divider capacitor (C1, C2) respectively.

2. Three-level inverter having several phases according to claim 1, characterised in that all the phases are connected by way of the respective third and fourth connecting diode (D121, D221 and D122, D222...) jointly to the third and fourth series circuit arrangement (CSP1, R1 and CSP2, R2) connected in parallel with the first and second voltage divider capacitor (C1, C2) respectively.

3. Three-level inverter according to claim 1 or 2, characterised by a respective ohmic resistor (R1, R2) as a first and second direct current load (Figures 1, 5).

4. Three-level inverter according to claim 1 or 2, characterised in that provided as a first and second direct current load there is a respective energy feedback arrangement with a first and second switching element, a first and second storage inductor and a first and second coupling diode (S1, L3, D13 and S2, L4, D23 respectively), with, instead of the first and second direct current load, the respective switching element and the associated storage inductor being connected in series with the first and second storage capacitor (CSP1, S1, L3 and CSP2, S2, L4 respectively) and the connecting points between the respective switching element and the associated storage inductor (S1, L3 and S2, L4) additionally being connected, by way of the first and second coupling diode (D13 and D23 respectively), to the connecting point (M) of the two voltage divider capacitors (Figure 3).

5. Three-level inverter according to one of the preceding claims, characterised in that, for the purpose of relieving the semiconductor switching elements in particular during the switching-off process, connected in parallel with the second and third antiparallel circuit arrangement (T2, D2 and T3, D3) there is a fifth and sixth series circuit arrangement consisting of a first and second supplementary connecting capacitor and a first and second supplementary connecting diode (C10, D10 and C20, D20 respectively) and means are provided for discharging the supplementary connecting capacitors.

6. Three-level inverter according to claim 5, characterised in that provided as means for discharging the supplementary connecting capacitors there is a respective third and fourth direct current load which is connected in each case between the connecting point of the first and second supplementary connecting capacitor with the first and second supplementary connecting diode (C10, D10 and C20, D20 respectively) and the output (A) of the inverter phase.

7. Three-level inverter according to claim 6, characterised by a respective ohmic resistor (R10, R20) as a third and fourth direct current load (Figure 2).

8. Three-level inverter according to claim 5, characterised in that provided as means for discharging the supplementary connecting capacitors there is a fifth direct current load which is connected between the connecting point of the first supplementary connecting capacitor with the first supplementary connecting diode (C10, D10) and the connecting point of the second supplementary connecting capacitor with the second supplementary connecting diode (C20, D20).

9. Three-level inverter according to claim 8, characterised by an ohmic resistor (R12) as a fifth direct current load (Figure 3).

10. Three-level inverter according to claim 8, characterised in that provided as a fifth direct current load there is a further energy feedback arrangement with an isolating transformer (TR), the primary winding (W1) of which is connected, by way of a damping resistor (R13), to the connecting point of the first supplementary connecting capacitor with the first supplementary connecting diode (C10, D10) and to the connecting point of the second supplementary connecting capacitor with the second supplementary connecting diode (C20, D20), and the secondary winding (W2) of which transformer is connected, by way of a third coupling diode (D14), to the positive potential and to the negative potential of the direct voltage source (U_{D}) (Figure 4).

11. Three-level inverter, in which an inverter phase contains a series arrangement of four antiparallel circuit arrangements each consisting of a semiconductor switching element (T1, T2, T3, T4) and a free-wheeling diode (D1, D2, D3, D4), the connecting point of the second antiparallel circuit arrangement with the third antiparallel circuit arrangement serves as a phase output (A), the phase is fed by a direct voltage source (U_{D}), the ends of the series arrangement are connected, by way of a first and second switching-on relief choke (L1, L2), to the positive and negative potential respectively of the direct voltage source (U_{D}), and the connecting points between the first and second and between the third and fourth antiparallel circuit arrangement are connected, by way of a first and second decoupling diode (D5, D6) respectively, to the connecting point (M) between a first and second voltage divider capacitor (C1, C2), which capacitors are fed by the direct voltage source (U_{D}), characterised in that for the purpose of relieving the semiconductor switching elements, in particular during the switching-off process, connected in parallel with the first and second decoupling diode (D5 and D6 respectively) there is a first and second series circuit arrangement consisting of a first and second connecting diode and a first and second switching-off relief capacitor (D11, CS1 and D21, CS2 respectively), the connecting point between the elements of the first and second series circuit arrangement being in electrical contact, by way of a third and fourth connecting diode (D12 and D22 respectively), with the connecting point between the elements of a third and fourth series circuit arrangement which consists of a first and second storage capacitor and a first and second direct current load (CSP1, R1 and CSP2, R2 respectively) and which is connected in parallel with the series circuit arrangement consisting of the first and second switching-on relief choke with the first and second voltage divider capacitor (L1, C1 and L2, C2 respectively).

12. Three-level inverter having several phases according to claim 11, characterised in that all the phases are connected by way of the respective third and fourth connecting diode (D121, D221 and D122, D222...) jointly to the third and fourth series circuit arrangement (SP1 (sic), R1 and CSP2, R2) connected in parallel with the series circuit arrangement consisting of the first and second switching-on relief choke with the first and second voltage divider capacitor (L1, C1 and L2, C2 respectively).

13. Three-level inverter according to claim 11 or 12, characterised by a respective ohmic resistor (R1, R2) as a first and second direct current load (Figures 6, 8).

14. Three-level inverter according to claim 11 or 12, characterised in that provided as a first and second direct current load there is a respective energy feedback arrangement with a first and second switching element, a first and second storage inductor and a first and second coupling diode (S1, L3, D13 and S2, L4, D23 respectively), with, instead of the first and second direct current load, the respective switching element and the associated storage inductor being connected in series with the first and second storage capacitor (CSP1, S1, L3 and CSP2, S2, L4 respectively) and the connecting points between the respective switching element and the associated storage inductor (S1, L3 and S2, L4) additionally being connected, by way of the first and second coupling diode (D13 and D23 respectively), to the positive and negative potential of the direct voltage source (U_{D}) (Figure 7).

## Revendications

1. Onduleur à trois niveaux, dans lequel une phase de l'onduleur contient un montage en série de quatre circuits antiparallèles constitués chacun d'un élément de commutation à semiconducteurs (T1,T2,T3,T4) et d'une diode à effet unidirectionnel (D1,D2,D3,D4), le point de jonction entre le second circuit antiparallèle et le troisième circuit antiparallèle constitue la sortie (A) de la phase, la phase est alimentée par une source de tension continue (U_{D}), les extrémités du montage série sont raccordées par l'intermédiaire d'une première et d'une seconde bobines d'arrêt de déchargement de fermeture (L1,L2) aux potentiels positif et négatif de la source de tension continue (U_{D}), et les points de jonction entre les premier et second circuits antiparallèles et entre les troisième et quatrième circuits antiparallèles sont raccordés par l'intermédiaire d'une première diode et d'une seconde diode de découplage (D5,D6) au point de jonction (M) entre un premier et un second condensateurs de division de tension (C1,C2), qui sont alimentés par la source de tension continue (U_{D}), caractérisé par le fait que pour décharger les éléments de commutation à semiconducteurs, notamment pendant l'opération d'ouverture, un premier et un second circuits série formés par une première ou une seconde diode de câblage et un premier ou un second condensateur de déchargement d'ouverture (D11,CS1 ou D21,CS2) sont branchés en parallèle avec les premier et quatrième circuits antiparallèles (T1,D1 et T4,D4), le point de jonction entre les éléments des premier et second circuits série étant placé en contact électrique, par l'intermédiaire d'une troisième et d'une quatrième diodes de câblage (D12 et D22), avec le point de jonction entre les éléments des troisième et quatrième circuits série, qui sont constitués par d'un premier et d'un second condensateurs de stockage et d'un premier et d'un second appareils d'utilisation à courant continu (CSP1,R1 et CSP2,R2) et sont branchés en parallèle avec les premier et second condensateurs de division de tension (C1,C2).

2. Onduleur à trois niveaux comportant plusieurs phases suivant la revendication 1, caractérisé par le fait que toutes les phases sont raccordées en commun, par l'intermédiaire des troisième et quatrième diodes respectives de câblage (D121,D221 et D122,D222...), aux troisième et quatrième circuits série (CSP1,R1 et CSP2,R2) branchés en parallèle avec les premier et second condensateurs de division de tension (C1,C2).

3. Onduleur à trois niveaux suivant la revendication 1 ou 2, caractérisé par respectivement une résistance ohmique (R1,R2) utilisée comme le premier et le second appareils d'utilisation à courant continu (figures 1,5).

4. Onduleur à trois niveaux suivant la revendication 1 ou 2, caractérisé par le fait que pour constituer les premier et second appareils d'utilisation à courant continu, il est prévu respectivement un dispositif de rétroalimentation en énergie comportant un premier ou un second élément de commutation, une première ou une seconde inductance de stockage et une première ou une seconde diode de couplage (S1,L3,D13 ou S2,L4,D23), l'élément de commutation respectif et l'inductance de stockage, qui lui est associée, sont branchés en série (CSP1,S1,L3 ou CSP2,S2,L4) non pas au premier ou au second appareil d'utilisation à courant continu, mais au premier ou au second condensateur de stockage, et les points de jonction entre l'élément de commutation respectif et l'inductance de stockage (S1,L3 ou S2,L4), qui lui est associée, sont raccordés en outre, par l'intermédiaire de la première ou de la seconde diode de couplage (D13 ou D23), au point de jonction (M) des deux condensateurs de division de tension.

5. Onduleur à trois niveaux suivant l'une des revendications précédentes, caractérisé par le fait que pour le déchargement des éléments de commutation à semiconducteurs, notamment pendant l'opération d'ouverture, un cinquième et un sixième circuits série formés d'un premier ou d'un second condensateur supplémentaire de câblage et d'une première ou d'une seconde diode supplémentaire de câblage sont branchés en parallèle (C10,D10 et C20,D20) aux second et troisième circuits antiparallèles (T2,D2 et T3,D3), et qu'il est prévu des moyens pour décharger les condensateurs supplémentaires de câblage.

6. Onduleur à trois niveaux suivant la revendication 5, caractérisé par le fait qu'il est prévu, comme moyens pour décharger les condensateurs supplémentaires de câblage, un troisième et un quatrième appareils d'utilisation à courant continu respectifs, qui sont branchés respectivement entre le point de jonction des premier et second condensateurs supplémentaires de câblage avec les première et seconde diodes supplémentaires de câblage (C10,D10 et C20,D20) et la sortie (A) de la phase de l'onduleur.

7. Onduleur à trois niveaux suivant la revendication 6, caractérisé par une résistance ohmique respective (R10,R20) utilisée comme troisième ou quatrième appareil d'utilisation à courant continu (figure 2).

8. Onduleur à trois niveaux suivant la revendication 5, caractérisé par le fait qu'il est prévu, comme moyens pour décharger les condensateurs supplémentaires de câblage, un cinquième appareil d'utilisation à courant continu, qui est branché entre le point de jonction du premier condensateur supplémentaire de câblage et de la première diode supplémentaire de câblage (C10,D10), et le point de jonction du second condensateur supplémentaire de câblage et de la seconde diode supplémentaire de câblage (C20,D20).

9. Onduleur à trois niveaux suivant la revendication 8, caractérisé par une résistance ohmique (R12) utilisée comme cinquième appareil d'utilisation à courant continu (figure 3).

10. Onduleur à trois niveaux suivant la revendication 8, caractérisé par le fait qu'il est prévu comme cinquième appareil d'utilisation à courant continu, un autre dispositif de rétroalimentation en énergie possédant un transformateur de séparation (TR), dont l'enroulement primaire (W1) est raccordé par l'intermédiaire d'une résistance d'amortissement (R3) au point de jonction du premier condensateur supplémentaire de câblage avec la première diode supplémentaire de câblage (C10,D10) et au point de jonction du second condensateur supplémentaire de câblage avec la seconde diode supplémentaire de câblage (C20,D20), et dont l'enroulement secondaire (W2) est raccordé par l'intermédiaire d'une troisième diode de couplage (D14) au potentiel positif et au potentiel négatif de la source de tension continue (U_{D}) (figure 4).

11. Onduleur à trois niveaux, dans lequel une phase de l'onduleur contient un montage en série de quatre circuits antiparallèles constitués chacun d'un élément de commutation à semiconducteurs (T1,T2,T3,T4) et d'une diode à effet unidirectionnel (D1,D2,D3,D4), le point de jonction entre le second circuit antiparallèle et le troisième circuit antiparallèle constitue la sortie (A) de la phase, la phase est alimentée par une source de tension continue (U_{D}), les extrémités du montage série sont raccordées par l'intermédiaire d'une première et d'une seconde bobines d'arrêt de déchargement de branchement (L1,L2) aux potentiels positif et négatif de la source de tension continue (U_{D}), et les points de jonction entre les premier et second circuits antiparallèles et entre les troisième et quatrième circuits antiparallèles sont raccordés par l'intermédiaire d'une première et d'une seconde diodes de découplage (D5,D6) au point de jonction (A) entre d'un premier et un second condensateurs de division de tension (C1,C2), qui sont alimentés par la source de tension continue (U_{D}), caractérisé par le fait que pour le déchargement des éléments de commutation à semiconducteurs, notamment pendant l'opération d'ouverture, un premier et un second circuits série formés par une première ou une seconde diode de câblage et un premier ou un second condensateur de déchargement d'ouverture (D11,CS1 ou D21,CS2) sont branchés en parallèle avec les première et seconde diodes de découplage (D5 et D6), le point de jonction entre les éléments des premier et second circuits série étant placé en contact électrique, par l'intermédiaire d'une troisième et d'une quatrième diodes de câblage (D12 et D22), avec le point de jonction entre les éléments d'un troisième et d'un quatrième circuits série, qui sont constitués par un premier et un second condensateurs de stockage et un premier et un second appareils d'utilisation à courant continu (CSP1,R1 et CSP2,R2) et qui sont branchés en parallèle avec le circuit série formé des première et seconde bobines d'arrêt de déchargement de fermeture et des premier et second condensateurs de division de tension (L1 ,C1 et L2,C2).

12. Onduleur à trois niveaux comportant plusieurs phases suivant la revendication 11, caractérisé par le fait que toutes les phases sont raccordées en commun, par l'intermédiaire des troisième et quatrième diodes respectives de câblage (D121,D221 et D122,D222...), aux troisième et quatrième circuits série (CSP1,R1 et CSP2,R2) branchés en parallèle avec le circuit série constitué par les première et seconde bobines d'arrêt de déchargement de fermeture et les premier et second condensateurs de division de tension (L1, C1 et L2, C2).

13. Onduleur à trois niveaux suivant la revendication 11 ou 12, caractérisé par respectivement une résistance ohmique (R1,R2) utilisée comme premier et second appareils d'utilisation à courant continu (figures 6,8).

14. Onduleur à trois niveaux suivant la revendication 11 ou 12, caractérisé par le fait que pour constituer les premier et second appareils d'utilisation à courant continu, il est prévu respectivement un dispositif de rétroalimentation en énergie comportant un premier ou un second élément de commutation, une première ou une seconde inductance de stockage et une première ou une seconde diode de couplage (S1,L3,D13 ou S2,L4,D23), l'élément de commutation respectif et l'inductance de stockage, qui lui est associée, sont branchés en série (CSP1,S1,L3 ou CSP2,S2,L4) non pas au premier ou au second appareil d'utilisation à courant continu, mais au premier ou au second condensateur de stockage, et les points de jonction entre l'élément de commutation respectif et l'inductance de stockage (S1,L3 ou S2,L4), qui lui est associée, sont raccordés en outre, par l'intermédiaire de la première ou de la seconde diode de couplage (D13 ou D23), au potentiel positif et au potentiel négatif de la source de tension continue (U_{D}) (figure 7).
